(19) **Europäisches Patentamt / European Patent Office / Office européen des brevets**

(11) **EP 3 754 864 A1**

(12) **EUROPEAN PATENT APPLICATION**
published in accordance with Art. 153(4) EPC

(43) Date of publication:
**23.12.2020 Bulletin 2020/52**

(51) Int Cl.:
**H04B 7/06** (2006.01)

(21) Application number: **18906289.6**

(22) Date of filing: **15.02.2018**

(86) International application number:
**PCT/JP2018/005354**

(87) International publication number:
**WO 2019/159301 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **NTT DoCoMo, Inc.**
**Tokyo 100-6150 (JP)**

(72) Inventors:
• **UCHINO, Tooru**
  **Tokyo 100-6150 (JP)**

• **OSAWA, Ryosuke**
  **Tokyo 100-6150 (JP)**
• **TAKEDA, Kazuki**
  **Tokyo 100-6150 (JP)**
• **TAKEDA, Kazuaki**
  **Tokyo 100-6150 (JP)**
• **TAKAHASHI, Hideaki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER DEVICE**

(57) A user equipment in a radio communication system including the user equipment and a base station that transmits a plurality of reference signals, including: an uplink transmission power information calculation unit configured to estimate a pathloss between the base station and the user equipment based on received power of the reference signal for each reference signal of the plurality of reference signals, and to calculate uplink transmission power information; and a signal transmission unit configured to generate control information in which the uplink transmission power information is set for each resentence signal of the plurality of reference signals, and transmit the control information to the base station.

FIG 12

# EP 3 754 864 A1

**Description**

[Technical Field]

The present invention relates to a user equipment in a radio communication system.

[Background Art]

Currently, radio services are widely provided by LTE (including LTE-Advanced). In 3GPP, the study and standardization of a radio communication scheme called 5G is proceeding in order to realize further increase in system capacity from LTE, further increase in data transmission speed, and further reduction in delay in the radio section. At 5G, various techniques have been studied to satisfy the requirement that the delay of the radio section be 1 ms or less while achieving throughput of 10 Gbps or more. The radio access technology that supports 5G is called NR (New Radio).

In the LTE, PHR (power headroom report) control is performed for uplink transmission power control, and it is assumed that PHR control based on PHR control in the LTE is also performed in the NR. In the PHR control, the user equipment UE notifies the base station of a PHR signal including a PH (power headroom), and the base station performs scheduling of the UL (Uplink) transmission of the user equipment UE, transmission power control, and the like based on the PHR signal.

[Prior Art Document]

[Non-patent Documents]

[Non-patent Document 1] 3GPP TS 36.321 V15.0.0 (2017-12)
[Non-patent Document 2] 3GPP TS 38.321 V15.0.0 (2017-12)

[Summary of the Invention]

[Problem to be solved by the invention]

NR has introduced controls to achieve beamforming. For example, the user equipment UE can simultaneously monitor multiple beams (actually corresponding reference signals (RS)) to allow the base station to select an appropriate beam according to the radio status of the user equipment UE. The base station performs control to report the quality of each beam to the user equipment UE and switch to a better quality beam.

When a beam is used, since pathloss varies between beams monitored by the user equipment UE due to differences in beamforming gain, the base station needs to have the user equipment UE report a PH with the pathloss corresponding to each beam.

In the prior art, the user equipment UE reports PH to the base station using PHR MAC CE described in Non-Patent Documents 1 and 2. However, the prior art cannot report a PH with a pathloss corresponding to each beam.

The present invention has been made in view of the foregoing, and is intended to provide a technique for enabling a user equipment to report uplink transmission power information to a base station in a radio communication system to which beamforming is applied, taking into account the pathloss per beam.

[Means for Solving Problems]

According to the disclosed technique, there is provided a user equipment in a radio communication system including the user equipment and a base station that transmits a plurality of reference signals, including:

an uplink transmission power information calculation unit configured to estimate a pathloss between the base station and the user equipment based on received power of the reference signal for each reference signal of the plurality of reference signals, and to calculate uplink transmission power information; and
a signal transmission unit configured to generate control information in which the uplink transmission power information is set for each resentence signal of the plurality of reference signals, and transmit the control information to the base station.

[Effect of invention]

According to the disclosed technique, in a radio communication system to which beamforming is applied, a technique is provided that enables a user equipment to report uplink transmission power information to a base station in consideration of pathloss of each beam.

[Brief Description of the Drawings]

Fig. 1 is a diagram illustrating a configuration of a radio communication system according to an embodiment of the present invention;
Fig. 2 is a diagram illustrating an example of PHR control;
Fig. 3 is a diagram illustrating an example of PHR control;
Fig. 4 is a diagram illustrating an example of PHR control;
Fig. 5 is a diagram illustrating an example of PHR control;
Fig. 6 is a diagram illustrating a basic example of operation according to an embodiment;
Fig. 7 is a diagram illustrating an example of the PHR MAC CE format in Example 1;
Fig. 8 is a diagram illustrating an example of a PHR MAC CE format in Example 1;
Fig. 9 is a diagram illustrating an example of a PHR MAC CE format in Example 1;
Fig. 10 is a diagram illustrating an example in Examples 3-1;
Fig. 11 is a diagram illustrating an example in Examples 3-2;
Fig. 12 is a diagram illustrating an example of a functional configuration of a user equipment UE according to an embodiment;
Fig. 13 is a diagram illustrating an example of the functional configuration of the base station 10 according to the embodiment;
Fig. 14 is a diagram illustrating an example of a hardware configuration of a base station 10 and a user equipment UE according to an embodiment.

[Modes for Carrying Out the Invention]

Hereinafter, an embodiment of the present invention (present embodiment) will be described with reference to the drawings. It should be noted that the embodiments described below are only one example, and the embodiments to which the present invention is applied are not limited to the following embodiments.

It is assumed that the radio communication system of the present embodiment supports at least the NR communication scheme. Additionally, in the operation of the radio communication system of the present embodiment, for example, the technology specified in the existing LTE may be used in order to perform operations not specified in the specifications of the NR.

(System Configuration)

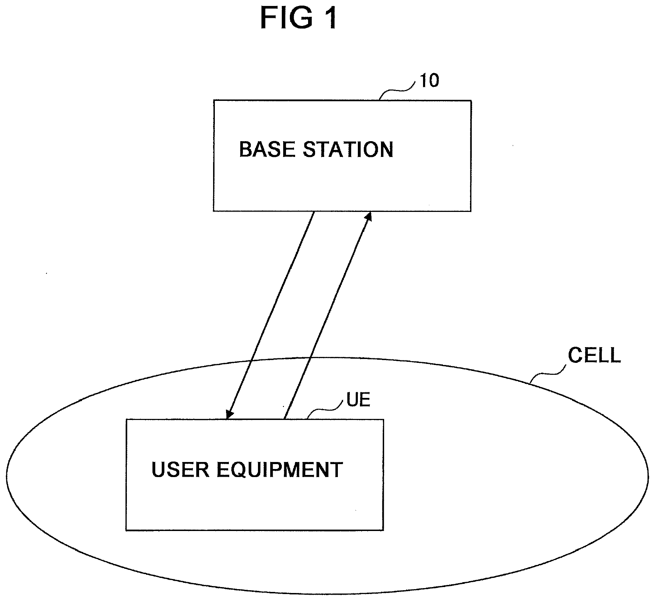

Fig. 1 is a diagram illustrating a configuration example of a radio communication system according to the present embodiment. As shown in FIG. 1, the radio communication system according to the present embodiment includes a base station 10 that forms a cell and a user equipment UE. In the radio communication system according to the present embodiment, there is generally a plurality of user equipment UE other than one user equipment UE shown in Fig. 1. FIG. 1 illustrates one user equipment UE as an example. In addition, in general, there are a plurality of base stations other than one base station 10 shown in Fig. 1. In FIG. 1, one base station 10 is shown as an example.

Both the base station 10 and the user equipment UE have NR functions. However, both the base station 10 and the user equipment UE may include LTE functions in addition to NR functions, or may include NR-only functions. Base station 10 corresponding to NR may be referred to as gNB.

Base station 10 and user equipment EU include the ability to perform carrier aggregation and beamforming. Carrier aggregation may be implemented between a single base station and a user equipment UE, or may be implemented between multiple base stations and a user equipment UE. Carrier aggregation performed between multiple base stations and the user equipment UE may be referred to as dual connectivity.

Since the present embodiment relates to PHR, PHR will be described first. In this specification, the PHR is basically used to report PH (power headroom) to the base station 10. The reported signal is called a PHR signal. The PH may also be referred to as "uplink transmission power information".

<About PHR>

Since the transmission power when the user equipment UE transmits data to the base station 10 needs to be of an appropriate size, the user equipment UE calculates the UL transmission power using a predetermined formula and transmits the UL transmission power using the calculated UL transmission power. The following is an example of the above predetermined equation for the transmission power of PUSCH (Physical Uplink Shared Channel). The processing content described in this embodiment is applicable not only to the transmission of the PUSCH, but also to other channels and signals.

Formula 1

$$P_{\text{PUSCH,c}}(i) = \min \left\{ \begin{array}{l} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\}$$

(Formula 1)

In Formula 1, $P_{\text{CMAx,c}}(i)$ is the maximum transmission power (after considering the required power backoff) in the ith subframe of serving cell c, $M_{\text{PUSCH,c}}(i)$ is the number of resource blocks, $\Delta_{\text{TF,c}}$ is the power offset derived from MCS (Modulation Coding Scheme), $PL_c$ is the pathloss, and $f_c(i)$ is the accumulated TPC command (closed-loop power control correction). Others are broadcast parameters. Specifically, $P_{\text{O\_PUSCH,c}}$ are the reference power offsets, and $\alpha_c(j)$ indicate the slope of the Fraction TPC. The pathloss is calculated (estimated) by the user equipment UE from the received power of the reference signal received by the user equipment UE from the base station 10 and the transmitted power information of the reference signal received from the base station 10.

The user equipment UE inputs the allocated amount of resources and the applicable MCS, etc. into the above-described predetermined expression, determines the transmission power, and performs UL transmission. When the calculated transmission power exceeds the maximum transmission power, UL transmission is performed by applying the maximum transmission power.

The base station 10 grasps the transmission power of the user equipment UE based on Equation 1 above in order to perform power control and scheduling (resource allocation, MCS determination, etc.) so that the transmission power of the user equipment UE is an appropriate value. However, since the pathloss is unknown among the variables in Equation 1 described above, the user equipment UE notifies the base station 10 of a PHR (power headroom reporting) signal including PH (power headroom) at a predetermined trigger (e.g., when the pathloss varies more than a predetermined value), and the base station 10 controls the transmission power of the user equipment UE based on the PHR signal.

The power headroom (PH) is the value calculated by Formula 2 below, which is the difference between the maximum transmission power (after considering the required power backoff) of the UE and the actual transmission power.

Formula 2

$$PH_{\text{type1,c}}(i) = P_{\text{CMAX},c}(i) - \left\{ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \right\}$$

(Formula 2)

The MAC specification for PHR in existing radio communication systems (Non-Patent Document 1, Non-Patent Document 2) allows PH to be reported in serving cells by a PHR MAC CE in the MAC layer. The reason for reporting on a serving cell basis is that the maximum transmission power, pathloss, etc. differ for each serving cell.

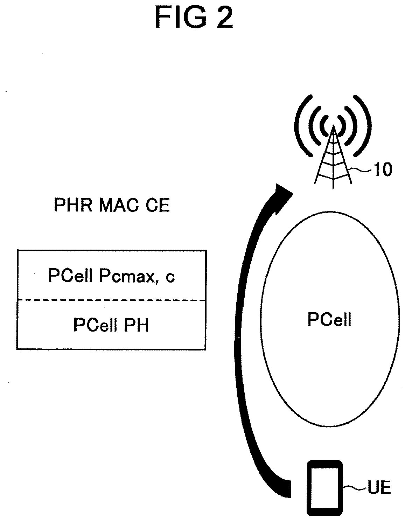

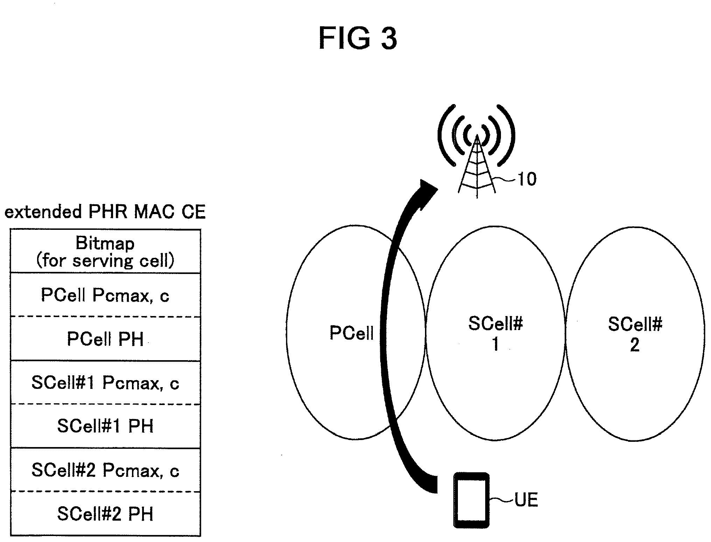

FIG. 2 illustrates an example where the user equipment UE uses one serving cell (PCell). As shown in FIG. 2, in this case, the user equipment UE reports Pcmax (Pcmax, c) and PH only for the PCell to the base station 10 by PHR MAC CE. FIG. 3 illustrates an example where the user equipment UE uses three serving cells (PCell, SCell #1, SCell #2). As illustrated in FIG. 3, in this case, the user equipment UE reports Pcmax and PH to the base station 10 by PHR MAC CE for each of PCell, SCell #1, and SCell #2. The Pcmax set to PHR MAC CE is the Pcmax used to calculate the corresponding PH.

(PHR Control during Beamforming)

The base station 10 in this embodiment can communicate with the user equipment UE using a plurality of beams by beamforming. The user equipment UE can monitor multiple beams simultaneously so that the base station 10 can select the appropriate beam for the radio situation of the user equipment UE. The base station 10 can perform controls to cause the user equipment UE to report the quality of each beam and switch to a better quality beam.

More specifically, each beam is associated with a reference signal transmitted from the base station 10 (RS (which may be in cell units or in UE units) or SSB (SS block), and the user equipment UE performs measurement of the quality of a beam (which may be RSRP or RSRQ) by, for example, receiving an RS associated with the beam. For example, each beam may be associated with an antenna port number of the RS. The RS is mapped to the resource for each antenna port number. The user equipment UE can obtain the quality of the RS measured with the RS resource of a given antenna port number as the quality of the beam associated with the antenna port number. In addition to the antenna port number, identification information (index) of the RS may be defined, and the user equipment UE may acquire the quality measured by the RS resource of a certain index as the quality of the beam corresponding to the RS of that index.

Since the pathloss observed by the user equipment UE may differ between beams monitored by the user equipment UE, for example, due to differences in beamforming gain, the base station 10 needs to have the user equipment UE report a PH with the pathloss corresponding to each beam. That is, a user equipment UE needs to report multiple PHs to a single serving cell/UL.

However, in the prior art described in Non-Patent Documents 1, 2, etc., PHR MAC CE is a format in which only one PH can be reported for each serving cell, and it is not assumed that PH with the pathloss corresponding to each beam is reported. That is, it is not possible to report PH with the pathloss corresponding to each beam. Accordingly, in the present embodiment, as described below, this problem is solved, and a PH with a pathloss corresponding to each beam is reported.

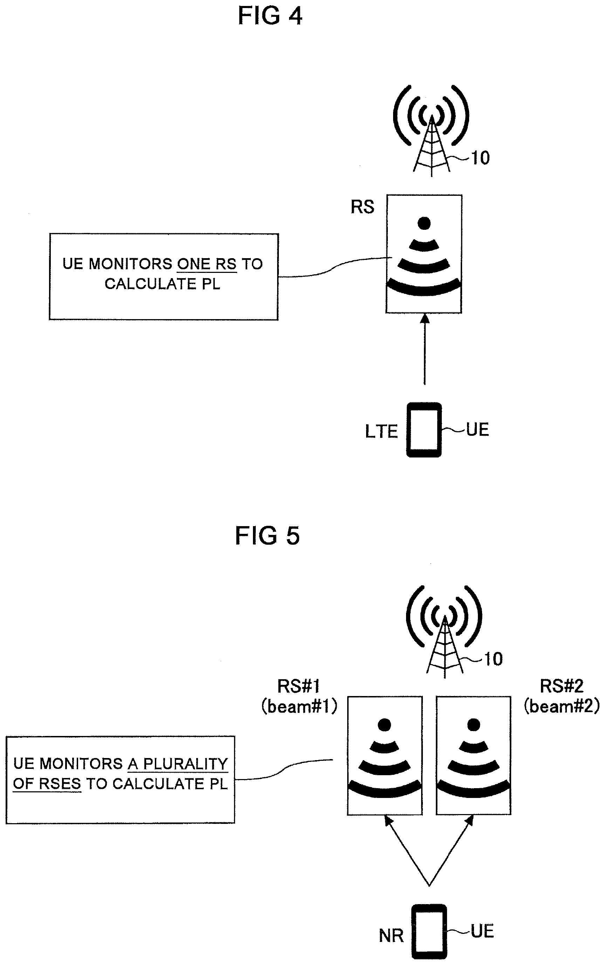

That is, in the prior art, as shown in FIG. 4, the user equipment UE monitors one RS (RS corresponding to one beam), calculates a pathloss, and reports a PH based on the pathloss. Meanwhile, in the present embodiment, as illustrated in FIG. 5, the user equipment UE monitors a plurality of RSs (RSs corresponding to each beam), computes a pathloss for each, and reports to the base station 10 a PH that reflects the pathloss for each beam.

Hereinafter, Examples 1, 2, and 3 will be described. Of Examples 1, 2, and 3, Example 1 is the most basic example, and Examples 2 and 3 are additionally applied to Example 1, respectively.

(Example 1)

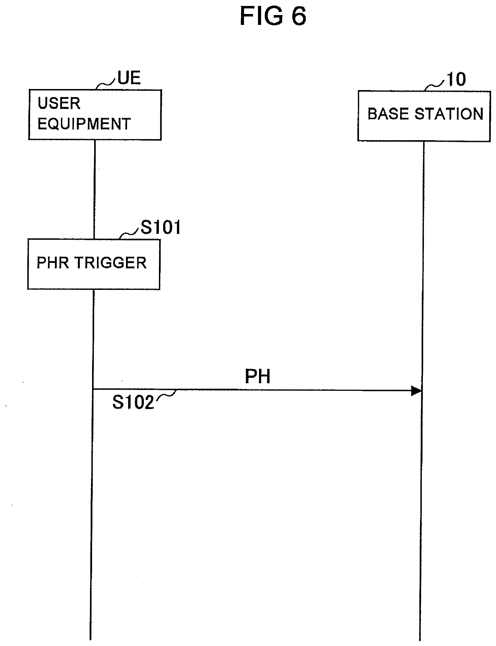

The basic operation example of Example 1 will be described with reference to Fig. 6. PH reporting is based on PHR triggers. In S101, the user equipment UE detects a PHR trigger. There are following PHR triggers, for example. The following is an example of a trigger disclosed in Non-Patent Document 1. The trigger considering each beam is described in Example 2.

The user equipment UE transmits a PHR signal at PUSCH transmission after a PHR trigger has been met. In the following description, the parameter enclosed in " " is a parameter that is notified by the base station 10 to the user equipment UE by RRC signaling.

- "PeriodicPHR-Timer" expires;
- Observe pathloss variation greater than "dl-PathlossChange" in at least one Activated Serving Cell from the expiration of "ProhibitPHR-Timer" and from the last PHR Transmission;
- Configuration or Reconfiguration of PHR;
- Activation of SCell configured with Uplink;
- Perform power-backoff change greater than "dl-PathlossChange" in at least one Activated Serving Cell from the expiration of "ProhibitPHR-Timer" and from the last PHR Transmission;

In the S102 of FIG. 6, the user equipment UE has UL resources capable of transmitting PHR MAC CE and transmits PH to the base station 10 with PHR MAC CE.

In Example 1, a novel PHR MAC CE is defined to allow the user equipment UE to transmit uplink transmission power information per RS to the base station for one serving cell, and the PHR MAC CE is used to report the PH in S102 of FIG. 6. PHR MAC CE may be referred to as "control information".

Specifically, for example, in PHR MAC CE, PH field, Pcmax, c field are provided for each RS. In addition, PH field, Pcmax, c field may be provided for each SSB.

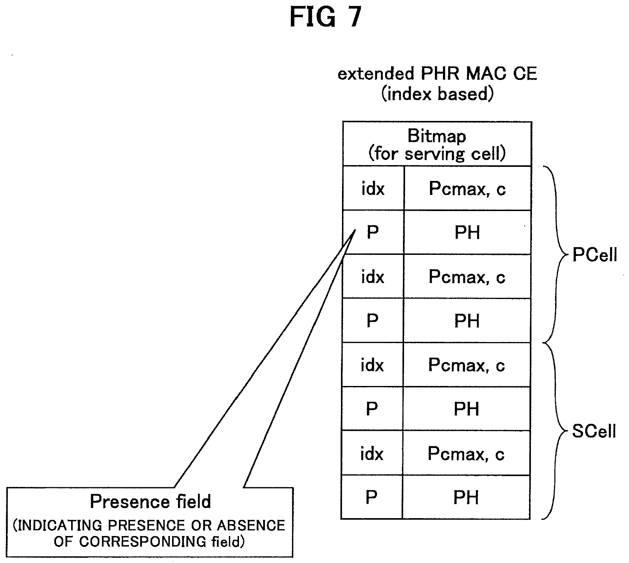

An example of the format of PHR MAC CE in Example 1 is shown in Figure 7. The idx shown in FIG. 7 is an index corresponding to RS. It is not necessary, however, that idx be the RS index itself. Since the RS is assumed to be associated with the beam, idx is also an index corresponding to the beam.

As shown in Fig. 7, PH field, Pcmax, c field are provided for each RS.

A user equipment UE using this format detects a PHR trigger and acquires Pcmax, c, and PH for each RS (per idx in FIG. 7) and generates and transmits PHR MAC CE set in each field shown in FIG. 7, if there is a UL resource capable of transmitting PHR MAC CE. Here, with respect to a field corresponding to RS of id = 1, for example, the PH in the field is PH using the pathloss measured by RS of id = 1. Measurements of Pcmax, c, and PH may be performed using the PHR trigger as a trigger, or may be performed at any time (periodically) in the lower layer regardless of the PHR trigger to hold and obtain the measurement results by the PHR trigger.

For Pcmax, c, for example, a value that takes into account the power backoff corresponding to the beam environment corresponding to the RS of id = 1 is set. When the values of Pcmax and c differ between cells but do not differ between the beams, Pcmax and c may be transmitted per cell (one Pcmax and c per cell) .

The P shown in FIG. 7 is a Presence field, and the value of P identifies whether the field continues for each cell. For example, when P = 1, the field continues, and when P = 0, it indicates that the field is terminated. For example, in the PCell field of the example of FIG. 7, the first P is 1, which identifies that the field follows. The next P in the PCell field is 0, which identifies that there is no PCell field below it. That is, by detecting the particular index, it may be judged that Pcmax, c, and PH for each RS in the cell have been grasped.

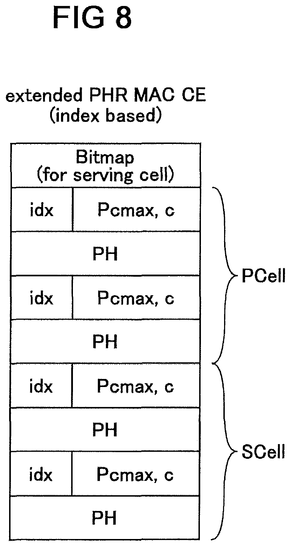

As shown in Fig. 8, the P field may not be provided in the PHR MAC CE. In this case, the value assignment of idx field can have the same role as P. For example, a specific index (e.g., maximum value of index, invalid value, Reserved value, etc.) is set as the value of the last idx in a cell, and the other fields (fields with subsequent fields) are not set as the value of idx.

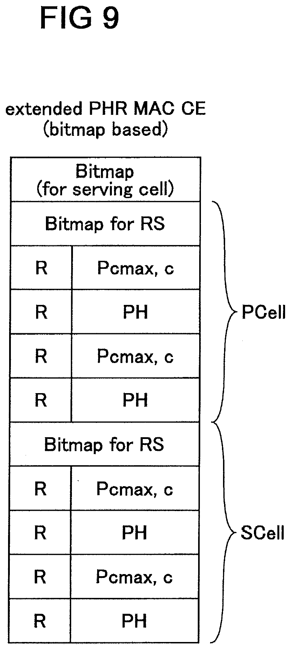

FIG. 9 shows another example of PHR MAC CE in Example 1. The example of FIG. 9 is also PHR MAC CE for reporting Pcmax, c, and PH to the base station 10 for each RS cell. In the example of FIG. 9, a bitmap field corresponding to the index group of RS is provided for each cell. The bit value (1 or 0) in the bitmap field or whether the bit value has been toggled (whether or not 0/1 has been switched) identifies whether there is an RS field corresponding to the relevant bit.

For example, suppose that bit value 1 indicates "relevant field present" and bit value 0 indicates "no relevant field" and there are three RSs (three beams) in a cell. In this case, when the three bits of bitmap field are arranged from the left in the order of index = 1, 2, and 3, bitmap = 101 indicates that there is a field corresponding to RS of index = 1, there is no field corresponding to RS of index = 2, and there is a field corresponding to RS of index = 3.

Note that, as shown in FIG. 9, a separate bitmap may be provided for each serving cell, or a single bitmap may be provided for all serving cells.

In the above example, an example is shown in which the Pcmax, c, and PH are reported to the base station 10 for each RS. However, this is merely an example. For example, Pcmax, c, and PH may be reported to the base station 10 for each PathlossReference Index. In this case, the idx shown in FIGS. 7 and 8 and the bitmap shown in FIG. 9 are associated with the PathlossReference Index. The PathlossReference Index is an index of the resource of a reference signal for performing quality measurements, such as RS or SSB used for pathloss measurements. The PathlossReference Index used by the user equipment UE is configured from the base station 10 to the user equipment UE by, for example, RRC signaling.

In addition, Pcmax, c, and PH may be reported to the base station 10 for each SRI field and/or for each P0AlphaSetIndex and/or for each PUSCHClosedLoopIndex, assuming for each of the above-described RS or PathlossReference Index (or without assuming for each RS or PathlossReference Index). The SRI field, P0AlphaSetIndex, and PUSCHClosedLoopIndex are included in the UL grant that assigns UL transmit resources and may vary for each UL transmission.

In addition, the user equipment UE may report Pcmax, c, and PH to the base station 10 for each RAT, Channel type, and/or Signal type. For example, as "for each Channel type/signal type", Pcmax, c, and PH are reported to the base station 10 for each of PUCCH, PUSCH, and SRS.

In addition, a set of parameters (one or more of RS index, PathlossReference Index, SRI field value, P0AlphaSetIndex, PUSCHClosedLoopIndex, Channel type, or signal type) described above may be grouped together, and each group may be indexed to provide an index-based report as described in FIGS. 7-9 and the like.

As an example, if PathlossReference Index and P0AlphaSetIndex is a group, if Index 1={Path1ossReference Index=1, P0AlphaSetIndex=1}, Index 2={PathlossReference Index=0, P0AlphaSetIndex=1}, Index 3={PathlosReference Index=1, and P0AlphaSetIndex=0}, then the user equipment UE measures the Pcmax, c, and PH for each of the conditions of Index 1 to 3 in each serving cell, and for example, in the format shown in Fig. 7, sets the Index 1 to 3 as the idx, and reports the PHR MAC CE with the value set in each field to the base station 10.

Note that, Indexes 1 to 3 and the contents of the set corresponding to the above-described Indexes 1 to 3 are notified by RRC signaling from the base station 10 to the user equipment UE, for example.

As described in Example 1, by enabling setting the PH of each RS of the PHR MAC CE, the uplink transmission power information incorporating the pathloss of each beam can be reported to the base station 10. The base station 10 also grasps the quality information of each beam in real time, allowing a smooth switch to a more appropriate beam.

(Example 2)

Next, an embodiment 2 will be described. In the existing LTE/NR MAC specification, the number and/or frequency of PH reported by the user equipment UE to the base station 10 are controlled by the following parameters (Non-Patent Documents 1 and 2).
> Phr-PeriodicTimer;
> Phr-ProhibitTimer;
> Phr-Tx-PowerFactorChange;
> Phr-Type2PCell;
> Phr-Type2OtherCell;
> Phr-ModeOtherCG;

In addition, the following PHR trigger is specified in Non-Patent Document 2. The following description is an extract from Non-Patent Document 2.

A Power Headroom Report (PHR) shall be triggered if any of the following events occur:

- phr-ProhibitTimer expires or has expired and the path loss has changed more than phr-Tx-PowerFactorChange dB for at least one activated serving cell of any MAC entity which is used as a pathloss reference since the last transmission of a PHR in this MAC entity when the MAC entity has UL resources for new transmission;
- phr-PeriodicTimer expires;
- upon configuration or reconfiguration of the power headroom reporting functionality by upper layers, which is not used to disable the function;
- activation of an SCell of any MAC entity with configured uplink;
- addition of the PSCell;
- phr-ProhibitTimer expires or has expired, when the MAC entity has UL resources for new transmission, and the following is true for any of the activated serving cells of any MAC entity with configured uplink:
- there are UL resources allocated for transmission or there is a PUCCH transmission on this cell, and the required power backoff due to power management (as allowed by P-MPRc as specified in TS 38.101 [10]) for this cell has changed more than phr-Tx-PowerFactorChange dB since the last transmission of a PHR when the MAC entity had UL resources allocated for transmission or PUCCH transmission on this cell.

In the prior art, the above parameters used in PHR triggers and the like are applied in units of MAC entity. For example, when the user equipment UE has the MAC entity for the MCG and the MAC entity for the SCG, the above parameters are set for each of the MAC entity for the MCG and the MAC entity for the SCG, and the parameters set for each of the MAC entity for the MCG and the MAC entity for the SCG are applied.

However, as described in Example 1, when PH is reported in a finer unit than that of the prior art, appropriate PHR reporting control cannot be performed by applying parameters in units of MAC entity.

Accordingly, in Example 2, the parameters of the PHR control are defined in more detail, for example, by RS, by SRI field, by P0AlphaSetIndex, by PUSCHClosedLoopIndex, or by group units in which they are grouped.

Further, as described in Example 1, when the user equipment UE reports PH for each RS to the base station 10, the PHR trigger may be newly specified or the existing PHR trigger may be changed.

As an example, in Example 2, it is assumed that phr-Tx-PowerFactorChange is applied in units of RS. In this case, basically, the user equipment UE detects the PHR trigger and reports the PH when the pathloss measured by a certain RS among the multiple RSs being monitored changes larger than the phr-Tx-PowerFactorChange with respect to the pathloss measured by the RS at the time of the previous PHR transmission.

However, even if the user equipment UE detects that the pathloss has changed more than the phr-Tx-PowerFactorChange for a RS, it may not trigger the PHR and not report the PH unless the RS is the RS of the best beam (the beam with the highest received power).

Also, if a new RS (or PathlossReference Index) or parameter (SRI field, P0AlphaSetIndex, PUSCHClosedLoopIndex) is newly configured from the base station 10 to the user equipment UE, or if these are changed, the PHR may be triggered to allow the user equipment UE to report the changed PH early.

In existing techniques, PHR is triggered when the change in the value of a parameter (e.g., pathloss, P-MPR backoff) exceeds a threshold in each serving cell, whereas in Example 2, PHR may be triggered when the result of comparing the value of the parameter between serving cells or between RSs/beams exceeds a threshold.

As an example, the user equipment UE triggers a PHR when there is an RS/beam in which difference of quality (RSRP or RSRQ) to the quality of the reference RS/beam (e.g., in communication, best quality, default one, one specified from NW) exceeds a threshold. This is an action that assumes switching to a better one than a current reference. Comparison between RS/beams may also performed between multiple serving cells.

In addition, the RS of the subject to be compared may be limited in part. For example, the RS to be compared may be limited to those specified by NW (base station 10), those configured in early order, or those configured in late order.

According to Example 2, a PHR trigger suitable for performing PH reporting in finer units as in Example 1 can be realized. In other words, it is possible to achieve various effects such as flexible configuration design, high-precision control, and improvement of traceability (execution of various operations, triggering, etc.).

(Example 3)

Next, Example 3 will be described. As described in Example 1, when the user equipment UE reports PH in fine units, it is contemplated that the overhead may be increased due to an increase in the size of the PHR MAC CE. For example, when reporting PH for each RS or Channel type, the MAC CE size reported by the user equipment UE at a time increases from "number of serving cells × number of PH field size (6 bits)" to "number of serving cells × number of RSs × number of Channel types × number of PH field size (6 bits)".

Accordingly, in Example 3, the user equipment UE performs processing to avoid increasing the size of the PHR MAC CE. Hereinafter, Examples 3-1 and 3-2 will be described.

<Example 3-1>

In Example 3-1, the number of bits of field in the PHR MAC CE is reduced. Specifically, the user equipment UE uses the report value for beams other than the best quality beam (best beam) as a relative value from the best beam. This reduces the dynamic range and reduces the number of bits needed to represent Pcmax, c, PH (e.g., PH can be represented in 2 bits). In this case, for example, the format of the PHR MAC CE may be a format that is changed in size of the field from the format described in Example 1.

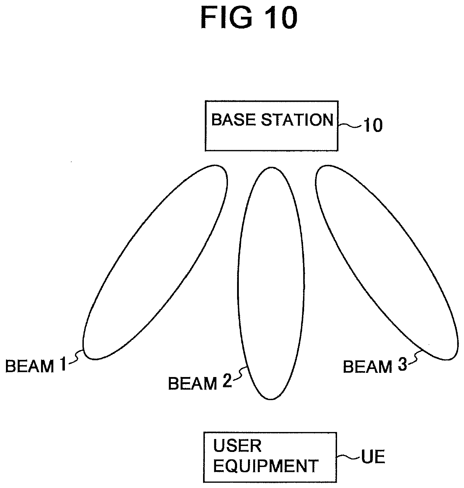

As an example, it is assumed that the user equipment UE monitors three beams (three RSs) from the base station 10, as shown in FIG. 10. It is also assumed that the format of FIG. 7 is used. In this case, if beam 1 is the best beam, the user equipment UE sets the Pcmax, c level value (e.g., 6 bits) of the beam 1 in the Pcmax, c field of the index corresponding to the beam 1, and sets the PH level value (e.g., 6 bits) calculated using the pathloss measured by the RS of the beam 1 in the PH field of the index.

In addition, the user equipment UE sets the Pcmax,c field of the index corresponding to beam 2 with a relative value (e.g., 1dB), from the Pcmax, c level of beam 1, of the Pcmax,c level of beam 2, and sets the PH field of the index with a relative value (e.g., 1dB), from the PH level calculated using the pathloss measured by the RS of the beam 1, of the PH level calculated using the pathloss measured by the RS of the beam 2. The same applies to beam 3.

Alternatively, the number of bits of all Pcmax, c, and PH may be reduced, whether or not the beam is the best beam. In this case, because the dynamic range of the reported value is reduced, this method can be applied to allow some roughness in the accuracy of TPC control.

In addition, instead of reducing the number of bits of the reported value as described above, the user equipment UE may report only Pcmax, c, and PH of the RS/beam whose quality has actually changed. For example, in the example of FIG. 10, it is assumed that the user equipment UE detects that the quality of the RS of beam 2 has changed in excess of a threshold with respect to the quality of the RS of beam 2 at the time of the previous PHR report, and that this becomes a PHR trigger. At this time, the user equipment UE reports only Pcmax, c, and PH for beam 2 to the base station 10 based on the PHR trigger.

<Example 3-2>

Next, Example 3-2 will be described. In Example 3-2, the maximum size of the PHR MAC CE is predetermined. The user equipment UE generates a PHR MAC CE with Pcmax, c, and PH set for each RS per cell, for example, based on a PHR trigger. In this case, when the user equipment UE detects that the size of the PHR MAC CE exceeds the maximum size, the user equipment UE reports information the size of which is less than or equal to the maximum size of the PHR MAC CE at the initial PH reporting timing (PUSCH transmission timing) corresponding to the PHR trigger. The user equipment UE does not report information exceeding the maximum size to the base station 10. Alternatively, the user equipment UE may report information overflowing from the maximum size at the next PUSCH transmission timing.

In the existing technology (non-patent document 2), when the PHR MAC CE is transmitted, the triggered PH is canceled. However, as described above, when only part of the information falling within the maximum size is reported, the trigger may not be canceled, and the remaining information may be reported at the next PUSCH transmission timing.

The user equipment UE may also use predetermined bits in the PHR MAC CE to notify the base station 10 that a part of information has not been reported.

In Example 3-2, priority may be given to information reported by the user equipment UE to the base station 10. For example, the PH of a high priority serving cell, such as PCell, PSCell, PUCCH SCell, etc., may be preferentially reported.

Also, the best beam of each serving cell may be preferentially reported. In addition, Pcmax, c, and PH increased or decreased may be reported preferentially. Priority may be preconfigured in the user equipment UE or notified by NW (base station 10) (e.g., any signal may be used such as RRC, MAC, DCI, etc.). In addition, the maximum size described above may be specified from the NW (base station 10).

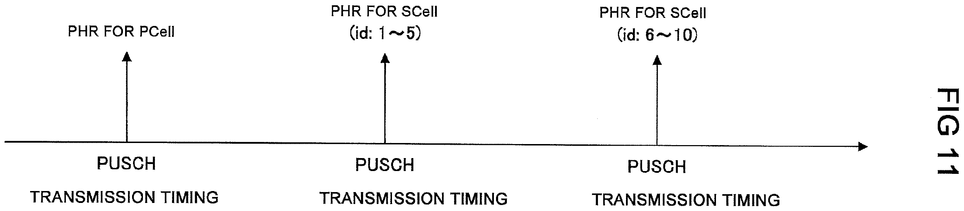

An example of sending a PHR MAC CE within the maximum size using the above priority will be described with reference to FIG. 11. In this example, assume that PCell and SCell exist, and that PCell has a higher priority than SCell, and that in each cell, the smaller the index value of RS, the higher the priority.

As shown in FIG. 11, at the first PUSCH transmission timing after the user equipment UE detects a PHR trigger, the user equipment UE transmits information of the PCell. Here, the size of the PHR MAC CE containing all of the PCell information is assumed to be less than or equal to the maximum size. Here, the PHR trigger is not cancelled, and the user equipment UE transmits information about the RS corresponding to id = 1-5 of the SCell at the next PUSCH transmission timing. The user equipment UE transmits information about RS corresponding to id = 6-10 of SCell at the next PUSCH transmission timing.

According to the above-described Example 3, an increase in the overhead can be avoided even when the PH report is carried out in fine units as in Example 1. That is, it is possible to expect effects such as weight reduction of operation and realization of a cost-effective design as long as no problem occurs in operation.

(Other Examples)

For each operation in Examples 1-3 described above, the user equipment UE may notify the base station 10 of the UE capability information indicating whether the operation is applicable.

The UE capability information includes, for example, one or more of the following (1) to (3) information, or a combination of one or all of the following.

(1) Applicable RS, parameter, or parameter set.
(2) Applicable Channel type, Signal type (or number of applicable Channel types, Signal types) or applicable PH type for each channel type and/or Signal type when reporting for each Channel type and/or for each Signal type.
(3) Identification information of the serving cell that is applicable. Alternatively, the number of serving cells that can be applied.

In addition, the user equipment UE may report the UE capability information in units of any of RAT, UE, MAC entity, cell group, band combinations, band, and CC.

Furthermore, the operation described in Examples 1 to 3 may be applied in various combinations across Examples.

(Equipment Configuration)

Next, a functional configuration example of a user equipment UE and a base station 10 that execute the process operation described above will be described. The user equipment UE and the base station 10 have all of the functions described in this embodiment. However, the user equipment UE and base station 10 may include only some of the functions described in this embodiment.

<User equipment>

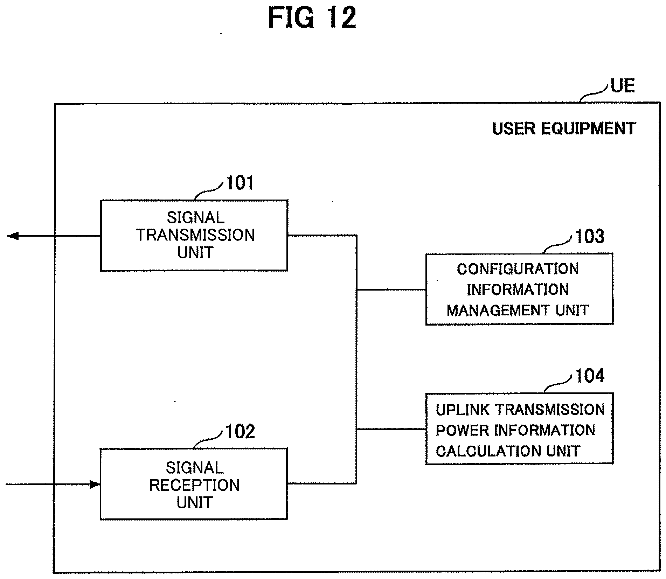

Fig. 12 is a diagram illustrating an example of a functional configuration of a user equipment UE. As illustrated in FIG. 12, the user equipment UE includes a signal transmission unit 101, a signal reception unit 102, a configuration information management unit 103, and an uplink transmission power information calculation unit 104. The functional configuration shown in FIG. 12 is only one example. If the operation according to the present embodiment can be executed, the name of the functional classification and the functional portion may be any one. The signal transmission unit 101 may be referred to as a transmitter, and the signal reception unit 102 may be referred to as a receiver.

The signal transmission unit 101 creates a transmission signal from the transmition data and transmits the transmission signal by radio. The signal reception unit 102 receives a variety of signals by radio and acquires a higher layer signal from the received physical layer signal. The signal reception unit 102 includes a function for measuring signals such as RS and acquiring quality.

The configuration information management unit 103 stores various setup information received from the base station 10 by the signal reception unit 102, and preconfigured configuration information. Examples of configuration information include various parameters. The uplink transmission power information calculation unit 104 computes information such as pathloss, PH, and Pcmax.

For example, the uplink transmission power information calculation unit 104 is configured to estimate the pathloss between the base station and the user equipment based on the received power of the reference signal for each reference signal in a plurality of reference signals transmitted from a base station, and calculate the uplink transmission power information based on the pathloss. The signal transmission unit 101 is configured to generate the control information in which the uplink transmission power information is set for each reference signal in the plurality of reference signals and transmit the control information to the base station.

The control information includes, for example, identification information corresponding to a reference signal used to generate the uplink transmission power information set in the control information. The signal transmission unit 101 may detect a trigger for transmitting the control information to the base station based on the measurement result of the reference signal corresponding to the best beam. The signal transmission unit 101 may detect a trigger for transmitting the control information to the base station based on the difference between the measurement result of the reference signal as a reference and the measurement result of the other reference signal.

In addition, the signal transmission unit 101 can reduce the amount of uplink transmission power information based on the reference signal other than the reference signal of the best beam, and can set the uplink transmission power information in which the amount of information is reduced to the control information. In addition, the signal transmission unit 101 may generate the control information so as to be of a size smaller than a predetermined maximum size based on the priority of the uplink transmission power information reported to the base station.

<Base Station 10>

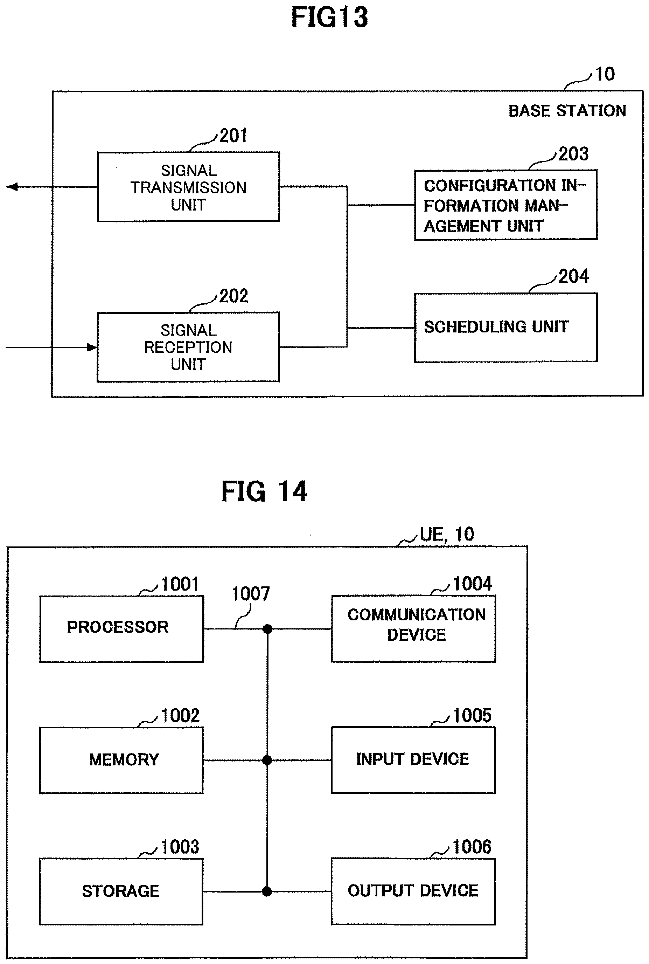

Fig. 13 is a diagram illustrating an example of a functional configuration of a base station 10. As illustrated in FIG. 13, the base station 10 includes a signal transmission unit 201, a signal reception unit 202, a configuration information management unit 203, and a scheduling unit 204. The functional configuration shown in Fig. 13 is only one example. If the operation according to the present embodiment can be executed, the name of the functional classification and the functional portion may be any one. The signal transmission unit 201 is referred to as a transmitter, and the signal reception unit 202 may be referred to as a receiver.

The signal transmission unit 201 includes a function that generates a signal to be transmitted to the user equipment UE side and transmits the signal by radio. The signal reception unit 202 includes a function for receiving various signals transmitted from the user equipment UE and acquiring information of a higher layer, for example, from the received signal. The signal transmission unit 201 and the signal receiving unit 202 have a beam forming function.

The configuration information management unit 203 stores various configuration information transmitted to the user equipment UE, various configuration information received from the user equipment UE, and preconfigured configuration information. The scheduling unit 204 includes a function for scheduling and transmitting power control based on the PHR signal received from the user equipment UE through the signal reception unit 202.

<Hardware Configuration>

The block diagram (Figs. 12 to 13) used in the description of the above-described embodiment illustrates a block of functional units. These functional blocks (components) are implemented by any combination of hardware and/or software. Further, the means for implementing each functional block is not particularly limited. That is, each functional block may be implemented by one device with a physical and/or logical combination of elements, or two or more devices that are physically and/or logically separated may be connected directly and/or indirectly (e.g., wired and/or radio) and implemented by a plurality of these devices.

For example, any of the user equipment UE and the base station 10 according to an embodiment of the present invention may function as a computer performing processing according to the present embodiment. Fig. 14 is a diagram illustrating an example of a hardware configuration of the user equipment UE and a base station 10 according to the present embodiment. Each of the aforementioned user equipment UE and base stations 10 may be physically configured as a computer device including a processor 1001, a memory 1002, a storage 1003, a communication apparatus 1004, an input device 1005, an output device 1006, a bus 1007, and the like.

In the following description, the term "device" can be read as a circuit, device, unit, etc. The hardware configuration of the communication apparatus 20 and base station 10 may be configured to include one or more of the devices illustrated as 1001-1006 in the figure, or may be configured without some devices.

Each function in the user equipment UE and the base station 10 is realized by having the processor 1001 reads a predetermined software (program) on hardware such as the processor 1001, the memory 1002, and the like, so that the processor 1001 performs an operation and controls communication by the communication apparatus 1004, reading and/or writing of data in the memory 1002 and the storage 1003.

Processor 1001, for example, operates an operating system to control the entire computer. Processor 1001 may be comprised of a central processing unit (CPU) including interfaces with peripheral devices, controls, computing devices, registers, and the like.

Processor 1001 also reads programs (program code), software modules or data from storage 1003 and/or communication apparatus 1004 into memory 1002 and performs various processing in accordance therewith. As a program, a program that causes a computer to execute at least a portion of the operation described in the above-described embodiment is used. For example, the signal transmission unit 101, the signal reception unit 102, the configuration information management unit 103, and the uplink transmission power information calculation unit 104 of the user equipment UE illustrated in Fig. 12 may be implemented by a control program stored in the memory 1002 and operated by the processor 1001. The signal transmitting unit 201, the signak receiving unit 202, the configuration information managing unit 203, and the scheduling unit 204 of the base station 10 illustrated in FIG. 13 may be implemented by a control program stored in the memory 1002 and operated by the processor 1001. Although the various processes described above have been described as being executed in one processor 1001, they may be executed simultaneously or sequentially by two or more processors 1001. Processor 1001 may be implemented in one or more chips. The program may be transmitted from the network via a telecommunications line.

Memory 1002 is a computer readable storage medium, and may be comprised of at least one such as, for example, ROM (Read Only Memory), EPROM (Erasable Programmable ROM), EEPROM (Electrically Erasable Programmable ROM), RAM (Random Access Memory). Memory 1002 may be referred to as a register, cache, main memory (main storage device), or the like. Memory 1002 may store programs (program code), software modules, etc. executable for executing processing according to one embodiment of the present invention.

Storage 1003 is a computer readable storage medium and may be comprised of, for example, at least one of an optical disk, such as a CD-ROM (Compact Disc ROM), a hard disk drive, a flexible disk, an optical magnetic disk (e.g., a compact disk, a digital versatile disk, a Blu-ray (TM) disk, a smart card, a flash memory (e.g., a card, a stick, a key drive), a floppy (TM) disk, a magnetic strip, or the like. Storage 1003 may be referred to as an auxiliary storage device. The storage medium described above may be, for example, a database including memory 1002 and/or storage 1003, a server, or other suitable medium.

Communication apparatus 1004 is a hardware (transceiver device) for communicating between computers over a wired and/or radio network, and is also referred to, for example, as a network device, a network controller, a network card, a communication module, and the like. For example, the signal transmission unit 101 and the signal reception unit 102 of the user equipment UE may be implemented in the communication apparatus 1004. The signal transmission unit 201 and the signal reception unit 202 of the base station 10 may be implemented in the communication apparatus 1004.

The input device 1005 is an input device (e.g., a keyboard, a mouse, a microphone, a switch, a button, a sensor, etc.) that receives an external input. Output device 1006 is an output device (e.g., a display, speaker, LED lamp, etc.) that performs outgoing output. The input device 1005 and the output device 1006 may be of an integrated configuration (e.g., a touch panel).

Each device, such as processor 1001 and memory 1002, is also connected by a bus 1007 for communicating information. The bus 1007 may be comprised of a single bus or may be comprised of different buses between devices.

In addition, the user equipment UE and the base station 10 may each include hardware such as a microprocessor, a digital signal processor (DSP), an ASIC (Application Specific Integrated Circuit), a PLD (Programmable Logic Device), and a FPGA (Field Programmable Gate Array), wherein the hardware may implement some or all of the functional blocks. For example, processor 1001 may be implemented in at least one of these hardware.

(Summary of Examples)

As described above, in accordance with the present embodiment, there is provided a user equipment in a radio communication system including the user equipment and a base station that transmits a plurality of reference signals, including:

an uplink transmission power information calculation unit configured to estimate a pathloss between the base station and the user equipment based on received power of the reference signal for each reference signal of the plurality of reference signals, and to calculate uplink transmission power information; and

a signal transmission unit configured to generate control information in which the uplink transmission power information is set for each resentence signal of the plurality of reference signals, and transmit the control information to the base station.

With the above configuration, in a radio communication system to which beamforming is applied, the user equipment can report the transmission power information to the base station in consideration of the pathloss per beam.

The control information includes identification information corresponding to a resentence signal used for generating uplink transmission power information set in the control information. With this configuration, the base station that receives the control information can easily grasp which reference signal corresponds to the uplink transmission power information.

The signal transmission unit is configured to detect a trigger for transmitting the control information to the base station based on a measurement result of a reference signal corresponding to a best beam. This configuration can reduce generation of unnecessary PHR triggers.

The signal transmission unit is configured to detect a trigger for transmitting the control information to the base station based on a difference between a measurement result of a reference signal that is a criteria and a measurement result of another reference signal. This configuration allows control based on the results of measurements between beams across the cells as well as within the cells.

The signal transmission unit is configured to reduce an information amount of uplink transmission power information based on a reference signal other than a reference signal of a best beam, and to set uplink transmission power information in which the information amount is reduced to the control information. This configuration avoids the increase in overhead by increasing the size of the control information.

The signal transmission unit is configured to generate the control information such that a size of the control information is equal to or less than a predetermined maximum size based on a priority of uplink transmission power information to be reported to the base station. This configuration avoids the increase in overhead by increasing the size of the control information.

(Supplement to Embodiments)

While the embodiment of the present invention has been described, the disclosed invention is not limited to such an embodiment, and various variations, modifications, alterations, and substitutions could be conceived by those skilled in the art. While specific examples of numerical values are used in order to facilitate understanding of the invention, these numerical values are examples only and any other appropriate values may be used unless otherwise stated particularly. The classification of items in the description is not essential in the present invention, and features described in two or more items may be used in combination, and a feature described in a certain item may be applied to a feature described in another item (unless contradiction occurs). It is not always true that the boundaries of the functional units or the processing units in the functional block diagram correspond to boundaries of physical components. The operations of a plurality of functional units may be physically performed by a single component. Alternatively, the operations of the single functional unit may be physically performed by a plurality of components. The orders in the sequence and the flowchart described in the embodiment may be switched unless contradiction occurs. For convenience of explanation of processing, the user equipment UE and the base station 10 have been explained using functional block diagrams. However, these devices may be implemented by hardware, software, or a combination thereof. The software that operates by a processor included in the UE according to the embodiment of the present invention and the software that operates by a processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, and other appropriate storage media.

Transmission of the information is not limited to the aspects/embodiments described in the invention, but may be performed by other methods. For example, transmission of the information may be performed by physical layer signaling (such as downlink control information (DCI) or uplink control information (UCI)), upper layer signaling (such as radio resource control (RRC) signaling, medium access control (MAC) signaling, broadcast information (such as a master information block (MIB) or a system information block (SIB)), other signaling, or a combination thereof. The RRC message may be referred to as RRC signaling. An RRC message may be, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which the systems are extended.

The processing procedures, sequences, flowcharts and the like of the aspects/embodiments described above in this specification may be changed in the order as long as they are not incompatible with each other. For example, in the methods described in this specification, various steps as elements are described in an exemplary order and the methods are not limited to the described order.

Specific operations which are performed by the base station in this specification may be performed by an upper node thereof in some cases. In a network including one or more network nodes including a base station, various operations which are performed to communicate with a user equipment UE can be apparently performed by the base station and/or network nodes (for example, an MME or an S-GW can be considered but the network nodes are not limited thereto) other than the base station. A case in which the number of network nodes other than the base station is one has been described above, but a combination of plural different network nodes (for example, an MME and an S-GW) may be used.

The aspects/examples described in this specification may be used alone, may be used in combination, or may be switched with implementation thereof.

The user equipment UE may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station 10 may be referred to as an NodeB (NB), an enhanced NodeB (eNB), a base station, gNB, or some other appropriate terms by those skilled in the art.

The terms "determining (determining)" and "deciding (determining)" used in this specification may include various types of operations. For example, "determining" and "deciding" may include deeming that to perform judging, calculating, computing, processing, deriving, investigating, looking up (e.g., search in a table, a database, or another data structure), or ascertaining is to perform "determining" or "deciding". Furthermore, "determining" and "deciding" may include deeming that to perform receiving (e.g., reception of information), transmitting (e.g., transmission of information), input, output, or accessing (e.g., accessing data in memory) is to perform "determining" or "deciding". Furthermore, "determining" and "deciding" may include deeming that to perform resolving, selecting, choosing, establishing, or comparing is to perform "determining" or "deciding". Namely, "determining" and "deciding" may include deeming that some operation is to perform "determining" or "deciding".

An expression "on the basis of ~" which is used in this specification does not refer to only "on the basis of only ~," unless apparently described. In other words, the expression "on the basis of ~" refers to both "on the basis of only ~" and "on the basis of at least ~."

So long as terms "include" and "including" and modifications thereof are used in this specification or the appended claims, the terms are intended to have a comprehensive meaning similar to a term "comprising." A term "or" which is used in this specification or the claims is intended not to mean an exclusive or.

In the entire disclosure, for example, when an article such as a, an, or the is added in translation into English, such an article refers to including the plural unless otherwise recognized from the context.

Although details of the present invention have been described, it is clear for the person skilled in the art that the invention is not limited to the above-mentioned embodiments in the description. The present invention can be implemented as modifications and changed forms without departing from the spirit and scope of the present invention as defined by the scope of the claims. Therefore, the description of the present specification is for the purpose of illustration and does not have any restrictive meaning to the present invention.

[Explanation of symbols]

    101 Signal transmission unit
    102 Signal reception unit
    103 Configuration Information Management unit
    104 Uplink transmission power information calculation unit
    201 Signal transmission unit
    202 Signal reception unit
    203 Configuration Information Management unit
    204 Scheduling unit
    1001 Processor
    1002 Memory
    1003 Storage
    1004 Communication device
    1005 Input device
    1006 Output device

**Claims**

1. A user equipment in a radio communication system including the user equipment and a base station that transmits a plurality of reference signals, comprising:

    an uplink transmission power information calculation unit configured to estimate a pathloss between the base station and the user equipment based on received power of the reference signal for each reference signal of the plurality of reference signals, and to calculate uplink transmission power information based on the pathloss; and

a signal transmission unit configured to generate control information in which the uplink transmission power information is set for each resentence signal of the plurality of reference signals, and transmit the control information to the base station.

2. The user equipment as claimed in claim 1, wherein the control information includes identification information corresponding to a reference signal used for generating uplink transmission power information set in the control information.

3. The user equipment as claimed in claim 1 or 2, wherein the signal transmission unit is configured to detect a trigger for transmitting the control information to the base station based on a measurement result of a reference signal corresponding to a best beam.

4. The user equipment as claimed in claim 1 or 2, wherein the signal transmission unit is configured to detect a trigger for transmitting the control information to the base station based on a difference between a measurement result of a reference signal that is a criteria and a measurement result of another reference signal.

5. The user equipment as claimed in any one of claims 1-4, wherein the signal transmission unit is configured to reduce an information amount of uplink transmission power information based on a reference signal other than a reference signal of a best beam, and to set uplink transmission power information in which the information amount is reduced to the control information.

6. The user equipment as claimed in any one of claims 1-5, wherein the signal transmission unit is configured to generate the control information such that a size of the control information is equal to or less than a predetermined maximum size based on a priority of uplink transmission power information to be reported to the base station.

# FIG 1

BASE STATION  10

USER EQUIPMENT  UE

CELL

# FIG 2

PHR MAC CE

| PCell Pcmax, c |
| --- |
| PCell PH |

PCell

~10

~UE

EP 3 754 864 A1

# FIG 3

extended PHR MAC CE

| Bitmap<br>(for serving cell) |
| --- |
| PCell Pcmax, c |
| PCell PH |
| SCell#1 Pcmax, c |
| SCell#1 PH |
| SCell#2 Pcmax, c |
| SCell#2 PH |

## FIG 4

UE MONITORS <u>ONE RS</u> TO CALCULATE PL

RS

LTE ~UE

~10

## FIG 5

UE MONITORS <u>A PLURALITY OF RSES</u> TO CALCULATE PL

RS#1 (beam#1)

RS#2 (beam#2)

NR ~UE

~10

# FIG 6

UE

USER
EQUIPMENT

10

BASE STATION

S101

PHR TRIGGER

PH

S102

# FIG 7

extended PHR MAC CE
(index based)

| Bitmap (for serving cell) | |
|---|---|
| idx | Pcmax, c |
| P | PH |
| idx | Pcmax, c |
| P | PH |
| idx | Pcmax, c |
| P | PH |
| idx | Pcmax, c |
| P | PH |

PCell

SCell

**Presence field**
(INDICATING PRESENCE OR ABSENCE
OF CORRESPONDING field)

# FIG 8

extended PHR MAC CE
(index based)

# FIG 9

extended PHR MAC CE
(bitmap based)

| Bitmap (for serving cell) | |  |
|---|---|---|
| Bitmap for RS | | ⎫ |
| R | Pcmax, c | |
| R | PH | PCell |
| R | Pcmax, c | |
| R | PH | ⎭ |
| Bitmap for RS | | ⎫ |
| R | Pcmax, c | |
| R | PH | SCell |
| R | Pcmax, c | |
| R | PH | ⎭ |

# FIG 10

BASE STATION — 10

BEAM 1  BEAM 2  BEAM 3

USER EQUIPMENT — UE

# FIG 11

# FIG 12

UE

USER EQUIPMENT

101

SIGNAL
TRANSMISSION
UNIT

103

CONFIGURATION
INFORMATION
MANAGEMENT UNIT

104

UPLINK TRANSMISSION
POWER INFORMATION
CALCULATION UNIT

102

SIGNAL
RECEPTION
UNIT

## FIG 13

10

BASE STATION

201

SIGNAL
TRANSMISSION
UNIT

203

CONFIGURATION IN-
FORMATION MAN-
AGEMENT UNIT

202

SIGNAL
RECEPTION
UNIT

204

SCHEDULING UNIT

## FIG 14

UE, 10

1001

PROCESSOR

1007

1004

COMMUNICATION
DEVICE

1002

MEMORY

1005

INPUT DEVICE

1003

STORAGE

1006

OUTPUT DEVICE

## INTERNATIONAL SEARCH REPORT

| | International application No. |
|---|---|
| | PCT/JP2018/005354 |

**A. CLASSIFICATION OF SUBJECT MATTER**
Int.Cl. H04B7/06(2006.01)i

According to International Patent Classification (IPC) or to both national classification and IPC

**B. FIELDS SEARCHED**

Minimum documentation searched (classification system followed by classification symbols)
Int.Cl. H04B7/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | ERICSSON, Power headroom reporting in NR, 3GPP TSG-RAN WG2 #100 Tdoc R2-1713484, 01 December 2017 | 1<br>3<br>2, 4-6 |
| Y<br>A | HUAWEI, HISILICON, PHR with multi-beam operation, 3GPP TSG-RAN WG2#100 R2-1713177, 01 December 2017 | 3<br>2, 4-6 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08.05.2018 | 22.05.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)